(19) Europäisches Patentamt
European Patent Office
Office européen des brevets

(11) **EP 2 619 239 B1**

(12) **EUROPÄISCHE PATENTSCHRIFT**

(45) Veröffentlichungstag und Bekanntmachung des Hinweises auf die Patenterteilung:
**09.07.2014  Patentblatt 2014/28**

(21) Anmeldenummer: **11754348.8**

(22) Anmeldetag: **31.08.2011**

(51) Int Cl.:
*C08F 220/18* *(2006.01)*    *C08F 265/06* *(2006.01)*

(86) Internationale Anmeldenummer:
**PCT/EP2011/064939**

(87) Internationale Veröffentlichungsnummer:
**WO 2012/038202 (29.03.2012 Gazette 2012/13)**

(54) **MEHRSTUFIGE HERSTELLUNG WÄSSRIGER HAFTKLEBSTOFFDISPERSIONEN FÜR DIE HERSTELLUNG VON SELBSTKLEBENDEN ARTIKELN**

PRESSURE SENSITIVE ADHESIVES BASED ON DISPERSIONS OBTAINED BY MULTISTEP PROCESS

ADHÉSIFS SENSIBLES À LA PRESSION BASÉS SUR DES DISPERSIONS AQUEUSES OBTENUES PAR PROCÉDÉ EN PLUSIEURS ÉTAPES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.09.2010  EP 10178845**

(43) Veröffentlichungstag der Anmeldung:
**31.07.2013  Patentblatt 2013/31**

(73) Patentinhaber: **BASF SE**
**67056 Ludwigshafen (DE)**

(72) Erfinder:
• **GERST, Matthias**
  **67487 Maikammer (DE)**
• **AUCHTER, Gerhard**
  **67098 Bad Dürkheim (DE)**
• **GROß, Michael**
  **68161 Mannheim (DE)**
• **WILMS, Daniel**
  **55232 Alzey (DE)**
• **BALK, Roelof**
  **67459 Böhl-Iggelheim (DE)**

(56) Entgegenhaltungen:
**EP-A1- 1 479 699    DE-A1- 19 857 876**

**Beschreibung**

Die Erfindung betrifft ein Verfahren zur Herstellung einer wässrigen Haftklebstoffdispersion aus ethylenisch ungesättigten, radikalisch polymerisierbaren Monomeren, wobei in einer ersten Stufe durch radikalische Emulsionspolymerisation ein erstes Polymerisat hergestellt wird. In einer zweiten Stufe wird eine wässrige Polymerdispersion in Gegenwart des ersten Polymerisats hergestellt. Die Monomeren der ersten Stufe umfassen Monomere mit Säuregruppen. Die Polymerisation der ersten Stufe erfolgt bei relativ niedrigem pH-Wert und die Säuregruppen des ersten Polymerisats werden erst nach der ersten Stufe entweder während der Polymerisation der zweiten Stufe oder vor und während der Polymerisation der zweiten Stufe neutralisiert. Die wässrigen Haftklebstoffdispersionen können zur Herstellung von selbstklebenden Artikeln verwendet werden.

Bei Haftklebstoffen ist sowohl eine gute Haftung (Adhäsion) zum Substrat gewünscht als auch eine ausreichende innere Festigkeit in der Klebstoffschicht (Kohäsion). Bei Adhäsion und Kohäsion handelt es sich um entgegengesetzte anwendungstechnische Eigenschaften. Maßnahmen, die eine Verbesserung der Adhäsion bewirken, führen im Allgemeinen gleichzeitig zu einer Verschlechterung der Kohäsion und umgekehrt. Haftklebstoffe auf Basis von wässrigen Polymerdispersionen, welche durch Emulsionspolymerisation erhältlich sind, sind lange bekannt. Insbesondere handelt es sich dabei um Polyacrylate. Es handelt sich dabei in der Regel um Copolymere, bei denen mindestens eines der Monomere ein Acrylsäureester ist, welcher Polymere mit relativ niedriger Glasübergangstemperatur bildet. Bei durch Emulsionspolymerisation unter Verwendung von relativ großen Emulgatormengen hergestellten Haftklebstoffdispersionen können die Klebewerte durch den zwangsläufig vorhandenen, relativ hohen Emulgatorgehalt beeinträchtigt werden. Ohne oder mit deutlich reduzierten Mengen an Emulgator kann es zu Instabilitäten der Dispersion oder zu einer verstärkten Bildung von Koagulat kommen. Es ist prinzipiell bekannt, Emulsionspolymerisation auch im Wesentlichen ohne Emulgatoren durchzuführen, wenn anstelle der Emulgatoren Schutzkolloide eingesetzt werden. Typische Schutzkolloide sind Säuregruppen aufweisende Polymere, welche bei Neutralisation der Säuregruppen bei erhöhten pH-Werten wasserlöslich sind. Bei diesen erhöhten pH-Werten und den üblicherweise erhöhten Temperaturen, bei denen Emulsionspolymerisationen durchgeführt werden, kann es allerdings zu unerwünschten Nebenreaktionen in Form von Verseifungen der Acrylatester kommen. Die dabei in geringem Umfang entstehenden Nebenprodukte können wiederum die Klebeeigenschaften der Haftklebstoffe beeinträchtigen.

DE 19857876 offenbart wässrige Polymerdispersionen, wobei die Polymerteilchen durch Stufenpolymerisation hergestellt werden und die Verwendung solcher Polymerdispersionen als Klebstoffzubereitungen, insbesondere als Haftklebstoffen. EP1479699 beschreibt eine zweistufige Polymerisation zur Bildung eines Kern/Schale-Polymerisat, die Neutralisation von Säuregruppen des ersten wasserlöslichen Polymerisats durch Zulauf eines Neutralisationsmittels während der Polymerisation der zweiten Stufe erfolgt.

Die Aufgabe bestand darin, wässrige Haftklebstoffdispersionen zur Verfügung zu stellen mit möglichst geringem Emulgatorgehalt, guter Adhäsion und Kohäsion und möglichst geringer Koagulatbildung.

Es wurde gefunden, dass die Aufgabe gelöst werden kann durch das nachfolgend näher erläuterte Herstellverfahren und durch die nach diesem Verfahren erhältlichen Polymerdispersionen.

Gegenstand der Erfindung ist ein Verfahren zur Herstellung einer wässrigen Haftklebstoffdispersion,

- wobei zunächst in einer ersten Stufe in wässrigem Medium durch radikalische Emulsionspolymerisation ein in Wasser dispergiertes erstes Polymerisat hergestellt wird, wobei das erste Polymerisat hergestellt wird aus einer ersten Zusammensetzung, enthaltend ethylenisch ungesättigte, radikalisch polymerisierbare Monomere, und wobei
- anschließend in einer zweiten Stufe eine Polymerdispersion in wässrigem Medium und in Gegenwart des ersten Polymerisats durch radikalische Emulsionspolymerisation einer von der ersten Zusammensetzung verschiedenen zweiten Zusammensetzung, enthaltend ethylenisch ungesättigte, radikalisch polymerisierbare Monomere, hergestellt wird,
- wobei die Monomeren der ersten Stufe mindestens ein Monomer mit mindestens einer Säuregruppe in einer Menge von mindestens 0,1 Gew.-Teilen, bezogen auf die Gesamtmenge an Monomeren der ersten und zweiten Stufe, umfassen, und
- wobei die Polymerisation der ersten Stufe bei einem pH-Wert kleiner 5, vorzugsweise kleiner oder gleich 4,5 erfolgt und entweder während der Polymerisation der zweiten Stufe oder vor und während der Polymerisation der zweiten Stufe die Säuregruppen des ersten Polymerisats soweit neutralisiert werden, dass der pH-Wert der Polymerdispersion am Ende der zweiten Stufe größer 5, vorzugsweise größer oder gleich 5,5 beträgt; und
- wobei die für ein aus den Monomeren der zweiten Stufe hergestelltes Polymer berechnete Glasübergangstemperatur kleiner -20 °C ist.

Ein Haftklebstoff ist ein viskoelastischer Klebstoff, dessen abgebundener Film bei Raumtemperatur (20°C) in trockenem Zustand permanent klebrig und klebfähig bleibt. Die Klebung auf Substraten erfolgt sofort durch leichten Anpressdruck. Eine wässrige Haftklebstoffdispersion ist eine Zusammensetzung, welche ein in Wasser oder in wässrigem Medium dispergiertes Polymer mit haftklebrigen Eigenschaften enthält.

Das beschriebene Verfahren umfasst die Herstellung von Polyacrylatdispersionen für die Anwendung als Haftklebstoff durch ein speziell angepasstes, sogenanntes Eintopfverfahren, das auf der Stabilisation von Emulsionspolymerisaten durch "in situ", d.h. während der Emulsionspolymerisation gebildeten Schutzkolloiden bzw. amphiphilen Polymeren oder Oligomeren, die wie Schutzkolloide wirken können, basiert.

Das Prinzip des erfindungsgemäßen Verfahrens beruht auf der vorzugsweise saatgesteuerten Bildung von kleinen Polymerpartikeln in wässriger Dispersion in einer ersten Polymerisationsstufe durch radikalische Polymerisation einer ersten Monomerzusammensetzung, enthaltend mindestens ein ethylenisch ungesättigtes Monomer mit mindestens einer Säuregruppe (z.B. eines Gemisches aus Alkyl(meth)acrylat, (Meth)acrylsäure und optional weiteren Monomeren) sowie anschließender Neutralisation der Säuregruppen. Dabei erfolgt die Neutralisation der Säuregruppen entweder teilweise vor und teilweise parallel mit der Zuführung und Polymerisation einer zweiten Monomerzusammensetzung (z.B. eines Gemisches aus Alkylacrylat und optional weiteren Monomeren) in einer zweiten Polymerisationsstufe. Oder die Neutralisation der Säuregruppen erfolgt vollständig parallel mit der Zuführung und Polymerisation der zweiten Monomerzusammensetzung in der zweiten Polymerisationsstufe. Die in der ersten Stufe gebildeten Partikel können nach Neutralisation wie Schutzkolloide wirken und die erfindungsgemäße Polymerdispersion stabilisieren. Zu Beginn der Reaktion der ersten Stufe sinkt der pH-Wert im Reaktionsgefäß durch kontinuierliche Säure- und Initiatorzugabe stetig ab. Hierdurch bedingt liegen die in der ersten Polymerisationsstufe gebildeten Polymerisatteilchen ungelöst vor. Erst mit zunehmender Neutralisation während der zweiten Polymerisationsstufe (z.B. durch Zugabe von Ammoniak) steigt der hydrophile Charakter der Polymerisatteilchen der ersten Stufe, welche in der mit Zugabe der Hauptmonomeren der zweiten Stufe einsetzenden Emulsionspolymerisation wie dispersionsstabilisierende amphiphile Schutzkolloide wirken können, da sie vorzugsweise aus unpolaren Alkyl(meth)acrylateinheiten und polaren (Meth)acrylsäureeinheiten zusammengesetzt sind.

Gegenstand der Erfindung sind auch wässrige Haftklebstoffdispersionen, hergestellt nach dem erfindungsgemäßen Verfahren, die Verwendung der erfindungsgemäßen wässrigen Haftklebstoffdispersionen zur Herstellung von selbstklebenden Artikeln, selbstklebende Artikel, welche unter Verwendung eines Haftklebstoffs, enthaltend eine erfindungsgemäße wässrige Polymerdispersion, hergestellt sind sowie ein entsprechendes Verfahren zur Herstellung von selbstklebenden Artikeln.

Die erfindungsgemäß hergestellten Polymerdispersionen sind durch radikalische Emulsionspolymerisation von ethylenisch ungesättigten Verbindungen (Monomeren) erhältlich. Die Polymerisation sowohl der ersten als auch der zweiten Stufe erfolgt dabei vorzugsweise emulgatorfrei oder emulgatorarm in dem Sinne, dass kein oder weniger als 1 Gew.% Emulgator zur Stabilisierung der erfindungsgemäßen Polymerdispersion zugesetzt wird. Emulgatoren sind der Polymerisationsmischung zugesetzte, nicht-polymere, amphiphile, oberflächenaktive Substanzen. Geringe Mengen an Emulgatoren, die z.B. durch die Verwendung von emulgatorstabilisierter Polymersaat bedingt sind, sind dabei unschädlich. Vorzugsweise wird insgesamt weniger als 1 oder weniger als 0,5 Gew.%, insbesondere weniger als 0,4 Gew.% oder weniger als 0,3 Gew.% Emulgator, bezogen auf Feststoffgehalt der Polymerdispersion, oder kein Emulgator verwendet.

In der ersten Stufe wird ein Polymerisat hergestellt aus Monomeren, welche mindestens ein Monomer mit mindestens einer Säuregruppe in einer Menge von mindestens 0,1 Gew.-Teilen, vorzugsweise von 0,5 bis 10 Gew.-Teilen, bezogen auf die Gesamtmenge an Monomeren der ersten und zweiten Stufe, umfassen. Vorzugsweise werden in der ersten Stufe Säuregruppen aufweisende Monomere (Säuremonomere) mit Monomeren ohne Säuregruppen, insbesondere nichtionischen Monomeren, copolymerisiert. Das Gewichtsverhältnis von Säuregruppen aufweisenden Monomeren zu Monomeren ohne Säuregruppen liegt im Monomerengemisch der ersten Polymerisationsstufe vorzugsweise im Bereich von 0,5 : 99,5 bis 30: 70, vorzugsweise von 1 : 99 bis 20 : 80 oder von 2 : 98 bis 15 : 85.

Das Polymerisat der ersten Stufe ist bei niedrigen pH-Werten von z.B. 2 bis 3 und mit nicht neutralisierten Säuregruppen nicht wasserlöslich aber in Wasser dispergiert. Wenn während oder vor und während der Polymerisation der zweiten Stufe Neutralisationsmittel zugegeben wird, erhöht sich sukzessive mit steigendem Neutralisationsgrad der Säuregruppen die Hydrophilie und Wasserlöslichkeit des Polymerisats der ersten Stufe. Mit zunehmender Hydrophilie und Wasserlöslichkeit kann das Polymerisat der ersten Stufe zunehmend als Schutzkolloid für das Polymer der zweiten Stufe wirken und gegen Ende der Polymerisation die Polymerdispersion mit hohem Polymerfeststoffgehalt stabilisieren. Schutzkolloide sind polymere Verbindungen, die bei Solvatation große Mengen Wasser binden und in der Lage sind, Dispersionen von wasserunlöslichen Polymeren zu stabilisieren. Das zahlenmittlere Molekulargewicht der Schutzkolloide liegt vorzugsweise oberhalb von 1000 g/mol, insbesondere oberhalb von 2000 g/mol und bevorzugt bis zu 50000 g/mol oder bis zu 10000 g/mol. beispielsweise von 1000 bis 100000 g/mol, von 1000 bis 10000 g/mol oder von 2000 bis 10000 g/mol.

Die bei Neutralisation als Schutzkolloide wirksam werdenden Polymerisate der ersten Stufe werden vorzugsweise in einer Menge von 1 bis 60 Gew.-% oder von 5 bis 50 Gew.-%, oder von 7 bis 40 Gew.% oder von 10 bis 30 Gew.-% (insbesondere wenn der Gesamtfeststoffgehalt der erfindungsgemäßen Polymerdispersion mehr als 50 Gew.% beträgt), bezogen auf 100 Gew.-% der zu polymerisierenden Monomeren verwendet.

Die Säuregruppen des Polymerisats der ersten Stufe können partiell oder vollständig mit geeigneten Basen neutralisiert werden. Vorzugsweise verwendet man Natronlauge, Kalilauge oder Ammoniak als Neutralisationsmittel.

Die in der ersten Stufe eingesetzten Säuremonomere können mit Monomeren ohne Säuregruppe copolymerisiert werden. Das Polymerisat der ersten Stufe wird vorzugsweise gebildet aus mindestens 40 Gew.-%, unten näher definierten, nichtionischen Hauptmonomeren sowie aus einer zweiten Monomerart, ausgewählt aus ethylenisch ungesättigten Säuremonomeren. Das Polymerisat der ersten Stufe kann darüber hinaus optional aus weiteren, vorzugsweise nichtionischen Monomeren gebildet sein. Das Polymerisat der ersten Stufe ist vorzugsweise zu mindestens 40 Gew.-%, insbesondere von 60 bis 99 Gew.% oder von 80 bis 98 Gew.%, bezogen auf sämtliche Monomere der ersten Stufe, aus Hauptmonomeren aufgebaut, welche ausgewählt sind aus der Gruppe bestehend aus C1- bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen und Mischungen dieser Monomeren. Hauptmonomere für das Polymerisat der ersten Stufe sind z. B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt. Als Hauptmonomere für das Polymerisat der ersten Stufe bevorzugt sind C1- bis C10-Alkylacrylate, C1- bis C10-Alkylmethacrylate, Vinylester von bis zu 20 C-Atome enthaltenden Carbonsäuren und Mischungen dieser Monomere, insbesondere $C_1$- bis $C_8$-Alkylacrylate und $C_1$- bis $C_8$-Alkylmethacrylate und Vinylester. Ganz besonders bevorzugt sind 2-Ethylhexylacrylat, Butylacrylat, Methylmethacrylat und Vinylacetat.

Das Polymerisat der ersten Stufe ist weiterhin vorzugsweise zu mindestens 1 Gew.%, insbesondere von 1 bis 40 Gew.% oder von 2 bis 20 Gew.%, bezogen auf sämtliche Monomere der ersten Stufe, aus ethylenisch ungesättigten Säuremonomeren aufgebaut. Ethylenisch ungesättigte Säuremonomere sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende alpha,beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure, Vinylmilchsäure und 2-Carboxyethylacrylat. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugt sind Acrylsäure und Methacrylsäure und deren Gemisch, besonders bevorzugt ist Acrylsäure.

In einer bevorzugten Ausführungsform handelt es sich bei dem Polymerisat der ersten Stufe um ein Copolymer, welches

(i) in einer Menge von 5 bis 50 Gew.%, bezogen auf 100 Gew.-Teile der insgesamt in der ersten und zweiten Stufe zu polymerisierenden Monomeren, eingesetzt wird,
(ii) zu mindestens 80 Gew.-% und bis zu 99 Gew-% aus Hauptmonomeren aufgebaut ist, welche ausgewählt sind aus der Gruppe bestehend aus C1- bis C10-Alkyl(meth)acrylaten, Vinylestern von bis zu 20 C-Atome enthaltenden Carbonsäuren und Mischungen dieser Monomeren, insbesondere 2-Ethylhexylacrylat, n-Butylacrylat, Methylmethacrylat und Vinylacetat, und
(iii) zu mindestens 1 Gew.% und bis zu 20 Gew-% aus ethylenisch ungesättigten Säuremonomeren aufgebaut ist, welche vorzugsweise ausgewählt sind aus Acrylsäure, Methacrylsäure und deren Gemisch.

In einer Ausführungsform der Erfindung wird bei der Polymerisation der ersten Stufe mindestens ein Molekulargewichtsregler eingesetzt. Hierdurch kann durch eine Kettenabbruchsreaktion die Molmasse des Emulsionspolymerisats verringert werden. Die Regler werden dabei an das Polymer gebunden, im Allgemeinen an das Kettenende. Die Menge der Regler beträgt insbesondere 0,05 bis 4 Gew.-Teile, besonders bevorzugt 0,05 bis 0,8 Gew.-Teile und ganz besonders bevorzugt 0,1 bis 0,4 Gew.-Teile, bezogen auf 100 Gew.-Teile der zu polymerisierenden Monomeren. Geeignete Regler sind z.B. Verbindungen mit einer Thiolgruppe wie tert.-Butylmercaptan, Thioglycolsäurealkylester, Mercaptoethanol, Mercaptopropyltrimethoxysilan oder tert.-Dodecylmercaptan. Bei den Reglern handelt es sich im Allgemeinen um niedermolekulare Verbindungen mit einem Molgewicht kleiner 2000, insbesondere kleiner 1000 g/mol.

In einer bevorzugten Ausführungsform der Erfindung erfolgt die Polymerisation der ersten Stufe in Gegenwart von Saatlatex. Saatlatex ist eine wässrige Dispersion von feinteiligen Polymerpartikeln mit einem mittleren Teilchendurchmesser von vorzugsweise 20 bis 40 nm. Saatlatex wird eingesetzt in einer Menge von vorzugsweise 0,05 bis 5 Gew.%, besonders bevorzugt von 0,1 bis 3 Gew.%, bezogen auf die Gesamtmonomermenge der ersten und zweiten Stufe. Geeignet ist z.B. ein Latex auf Basis von Polystyrol oder auf Basis von Polymethylmethacrylat. Ein bevorzugter Saatlatex ist Polystyrolsaat.

Bei den für die Polymerisation der zweiten Stufe eingesetzten Monomeren handelt es sich vorzugsweise zu mindestens 60 Gew.-%, bevorzugt zu mindestens 80 Gew.-%, z.B. von 80 bis 100 Gew.-%, besonders bevorzugt zu mindestens 90 Gew.-% oder zu 100 Gew.-%, bezogen auf die Gesamtmenge der Monomere der zweiten Stufe, aus einem oder mehreren der nachfolgend beschriebenen Hauptmonomeren. Die Hauptmonomeren sind ausgewählt aus der Gruppe bestehend aus $C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z. B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt.

Als Hauptmonomere für die Polymerisation der zweiten Stufe bevorzugt sind die $C_1$- bis $C_{10}$-Alkylacrylate und $C_1$- bis $C_{10}$-Alkylmethacrylate, insbesondere $C_1$- bis $C_8$-Alkylacrylate und $C_1$-bis $C_{10}$-Alkylmethacrylate und Vinylaromaten, insbesondere Styrol und deren Mischungen. Ganz besonders bevorzugt sind Methylacrylat, Methylmethacrylat, Ethylacrylat, n-Butylacrylat, n-Hexylacrylat, Octylacrylat, 2-Ethylhexylacrylat, 2-Propylheptylacrylat, Styrol, Vinylacetat sowie Mischungen dieser Monomere.

Neben den Hauptmonomeren können die Monomere für die Polymerisation der zweiten Stufe weitere Monomere umfassen, z.B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure. Weitere Monomere sind z. B. auch Hydroxylgruppen enthaltende Monomere, insbesondere $C_1$-$C_{10}$-Hydroxyalkyl(meth)acrylate sowie (Meth)acrylamid. Als weitere Monomere seien darüber hinaus Phenyloxyethylglykolmono-(meth-)acrylat, Glycidylacrylat, Glycidylmethacrylat, Amino-(meth-)acrylate wie 2-Aminoethyl-(meth)acrylat genannt. Als weitere Monomere seien auch vernetzende Monomere genannt. Vorzugsweise umfassen die in der zweiten Stufe eingesetzten Monomeren weniger als 2 Gew.-% oder keine Monomere mit Säuregruppen.

Insbesondere sind die Monomere für die Polymerisation der zweiten Stufe zu mindestens 60 Gew.-%, besonders bevorzugt zu mindestens 80 Gew.-%, z.B. von 60 bis 100 Gew.-%, und ganz besonders bevorzugt zu mindestens 95 Gew.-% oder zu 100 Gew.-% ausgewählt aus mindestens einem $C_1$ bis $C_{20}$ Alkylacrylat, mindestens einem $C_1$ bis $C_{20}$ Alkylmethacrylat, deren Gemisch oder deren Gemisch mit mindestens einem weiteren Monomeren, ausgewählt aus Styrol, Vinylacetat und $C_1$-$C_{10}$-Hydroxyalkylacrylaten.

In einer Ausführungsform ist das in der ersten Stufe eingesetzte Monomer mit mindestens einer Säuregruppe Acrylsäure; sind die in der ersten Stufe eingesetzten Monomere ohne Säuregruppe ausgewählt aus 2-Ethylhexylacrylat, n-Butylacrylat, Methylacrylat, Methylmethacrylat, Vinylacetat und deren Gemisch; und sind mindestens 80 Gew.% der in der zweiten Stufe eingesetzten Monomere ausgewählt aus der Gruppe bestehend aus C1- bis C10-Alkylacrylaten, C1- bis C10-Alkylmethacrylaten, Vinylacetat, Styrol und deren Gemisch.

Die Monomere der Polymerisation der zweiten Stufe sind so ausgewählt, dass die für ein aus den Monomeren der zweiten Stufe hergestelltes Polymer berechnete Glasübergangstemperatur kleiner -20 °C ist, insbesondere im Bereich von -60 °C bis -30 °C oder im Bereich von -55 °C bis -35 °C liegt. Durch gezielte Variation von Art und Menge der Monomeren ist es dem Fachmann erfindungsgemäß möglich, wässrige Polymerzusammensetzungen herzustellen, deren Polymere eine Glasübergangstemperatur im gewünschten Bereich aufweisen. Eine Orientierung ist mittels der Fox-Gleichung möglich. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für eine Berechnung der Glasübergangstemperatur von Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen

der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989. Für Ethylacrylat wird ein Wert von -13 °C verwendet.

Die tatsächliche Glasübergangstemperatur des Polymerisats der erfindungsgemäßen Polymerdispersion (erste und zweite Stufe) liegt vorzugsweise im Bereich von -55 °C bis -30 °C. Die tatsächliche Glasübergangstemperatur lässt sich bestimmen durch Differential Scanning Calorimetrie (ASTM D 3418-08, sogenannte "midpoint temperature").

Das Gewichtsverhältnis der Menge der in der ersten Stufe eingesetzten Monomere zur Menge der in der zweiten Stufe eingesetzten Monomere beträgt vorzugsweise von 5:95 bis 50:50 oder von 5:95 bis 40:60, besonders bevorzugt von 10:90 bis 30:70.

Die Herstellung der erfindungsgemäßen Polymerdispersion erfolgt durch Emulsionspolymerisation. Bei der Emulsionspolymerisation werden ethylenisch ungesättigte Verbindungen (Monomere) in Wasser polymerisiert, wobei üblicherweise ionische und/oder nichtionische Emulgatoren und/oder Schutzkolloide bzw. Stabilisatoren als grenzflächenaktive Verbindungen zur Stabilisierung der Monomertröpfchen und der später aus den Monomeren gebildeten Polymerteilchen verwendet werden. Erfindungsgemäß erfolgt aber sowohl die Polymerisation der ersten Stufe als auch die Polymerisation der zweiten Stufe emulgatorarm oder ganz oder nahezu emulgatorfrei. Vorzugsweise wird insgesamt weniger als 1 oder weniger als 0,5 Gew.%, insbesondere weniger als 0,4 Gew.% oder weniger als 0,3 Gew.% Emulgator, bezogen auf Feststoffgehalt der Polymerdispersion, oder kein Emulgator verwendet. Zur Stabilisierung der bei der Polymerisation der zweiten Stufe entstehenden Polymerdispersion wird das Polymerisat der ersten Stufe verwendet, welches in situ durch Zugabe von Neutralisationsmittel von einem nicht als Schutzkolloid wirksamen, wasserunlöslichen Polymer in ein als Schutzkolloid wirksames, wasserlösliches Polymer umgewandelt wird.

Vorzugsweise erfolgt die Neutralisation von Säuregruppen des ersten Polymerisats durch zumindest teilweisen Zulauf eines Neutralisationsmittels während der Polymerisation der zweiten Stufe, wobei der Zulauf an Neutralisationsmittel vorzugsweise parallel zum Monomerzulauf erfolgt. Das Neutralisationsmittel kann dabei in einem gemeinsamen Zulauf mit den zu polymerisierenden Monomeren oder in einem separaten Zulauf zugegeben werden. Nach Zulauf sämtlicher Monomere ist vorzugsweise die zur Neutralisation von mindestens 10%, vorzugsweise 30 bis 100% oder 30 bis 90% Säureäquivalenten benötigte Menge an Neutralisationsmittel in dem Polymerisationsgefäß enthalten.

Die Emulsionspolymerisation der ersten und zweiten Stufe kann mit wasserlöslichen Initiatoren gestartet werden. Wasserlösliche Initiatoren sind z.B. Ammonium- und Alkalimetallsalze der Peroxodischwefelsäure, z.B. Natriumperoxodisulfat, Wasserstoffperoxid oder organische Peroxide, z.B. tert-Butylhydroperoxid. Als Initiator geeignet sind auch so genannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei der Reduktionskomponente handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natriumperoxidisulfat, tert-Butylhydroperoxid/ Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration der Initiatoren 0,1 bis 30 Gew.-%, bevorzugt 0,2 bis 20 Gew.-%, besonders bevorzugt 0,3 bis 10 Gew.-%, bezogen auf die zu polymerisierenden Monomeren. Es können auch mehrere, verschiedene Initiatoren bei der Emulsionspolymerisation Verwendung finden.

Bei der Polymerisation der zweiten Stufe können die oben genannten Molekulargewichtsregler eingesetzt werden. Vorzugsweise erfolgt die Polymerisation der zweiten Stufe aber ohne Zugabe von weiteren Molekulargewichtsreglern.

Die Emulsionspolymerisation erfolgt in der Regel bei 30 bis 130°C, vorzugsweise bei 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation der ersten Stufe kann sowohl als Batchprozess als auch in Form eines Zulaufverfahrens, einschließlich Stufen- oder Gradientenfahrweise, durchgeführt werden. Bei der Polymerisation wird zur besseren Einstellung der Teilchengröße bevorzugte eine Polymersaat vorgelegt.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d.h. nach einem Umsatz der Monomeren von mindestens 95 % Initiator zugesetzt. Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-%, besonders bevorzugt größer oder gleich 50 Gew.-% erhalten. Für eine hohe Raum/ Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Das so hergestellte Polymerisat wird vorzugsweise in Form seiner wässrigen Dispersion verwendet. Die Größenverteilung der Dispersionsteilchen kann monomodal, bimodal oder multimodal sein. Bei monomodaler Teilchengrößenverteilung ist die mittlere Teilchengröße der in der wässrigen Dispersion dispergierten Polymerteilchen vorzugsweise kleiner 500 nm, insbesondere kleiner 400 nm. Unter mittlerer Teilchengröße wird hier der $d_{50}$-Wert der Teilchengrößenverteilung verstanden, d.h. 50 Gew.-% der Gesamtmasse aller Teilchen haben einen kleineren Teilchendurchmesser als der $d_{50}$-Wert. Die Teilchengrößenverteilung kann in bekannter Weise mit der analytischen Ultrazentrifuge (W. Mächtle, Makromolekulare Chemie 185 (1984), Seite 1025 -1039) bestimmt werden. Bei bi- oder multimodaler Teilchengrößenverteilung kann die Teilchengröße bis zu 1000 nm betragen. Der pH-Wert der Polymerdispersion wird vorzugsweise auf pH größer 5, insbesondere auf einen pH-Wert zwischen 5,5 und 8 eingestellt.

Ein erfindungsgemäßer Haftklebstoff enthält die Haftklebstoffpolymere vorzugsweise in Form der wässrigen Polymerdispersion, wie sie durch die Emulsionspolymerisation erhalten wurde oder erhältlich ist. Die Haftklebstoffe können allein aus den Polymeren bzw. der wässrigen Dispersion der Polymeren bestehen. Der Haftklebstoff kann jedoch auch noch weitere Zusatzstoffe enthalten, z.B. Füllstoffe, Farbstoffe, Verlaufsmittel, Verdicker, vorzugsweise Assoziativverdicker, Entschäumer, Weichmacher, Pigmente, Netzmittel oder Tackifier (klebrigmachende Harze). Tackifier sind z. B. aus Adhesive Age, Juli 1987, Seite 19-23 oder Polym. Mater. Sci. Eng. 61 (1989), Seite 588-592 bekannt. Für eine bessere Benetzung von Oberflächen können die Haftklebstoffe insbesondere Benetzungshilfsmittel, z. B. Fettalkoholethoxylate, Alkylphenolethoxylate, Nonylphenolethoxylate, Polyoxyethylene/-propylene, Dialkylester sulfonierter Dicarbonsäuren oder Natriumdodecylsulfonate enthalten. Die Menge an Zusatzstoffen beträgt im allgemeinen 0,05 bis 5 Gew.-Teile, insbesondere 0,1 bis 3 Gew.-Teile auf 100 Gew.-Teile Polymer (fest).

Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propantriol, Pentaerythrit. Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, a-Methylstyrol, Vinyltoluol Verwendung. Als Tackifier werden zunehmend auch Polyacrylate, welche ein geringes Molgewicht aufweisen, verwendet. Vorzugsweise haben diese Polyacrylate ein gewichtsmittleres Molekulargewicht $M_w$ unter 30 000. Die Polyacrylate bestehen bevorzugt zu mindestens 60, insbesondere mindestens 80 Gew.-% aus $C_1$-$C_8$ Alkyl(meth)acrylaten. Bevorzugte Tackifier sind natürliche oder chemisch modifizierte Kolophoniumharze. Kolophoniumharze bestehen zum überwiegenden Teil aus Abietinsäure oder Abietinsäurederivaten. Die Tackifier können in einfacher Weise der Polymerdispersion zugesetzt werden. Vorzugsweise liegen die Tackifier dabei selber in Form einer wässrigen Dispersion vor. Die Gewichtsmenge der Tackifier beträgt vorzugsweise 5 bis 100 Gew.-Teile, besonders bevorzugt 10 bis 50 Gew.-Teile. bezogen auf 100 Gew.-Teile Polymer (fest/fest).

Die erfindungsgemäße Haftklebstoffdispersion kann zur Herstellung von selbstklebenden Artikeln verwendet werden. Die selbstklebenden Artikel sind erhältlich, indem ein Trägermaterial zumindest teilweise mit der Haftklebstoffdispersion beschichtet wird. Vorzugsweise sind die selbstklebenden Artikel nach der Verklebung wiederabziehbar. Bei den selbstklebenden Artikeln kann es sich z.B. um Folien, Bänder oder Etiketten handeln. Geeignete Trägermaterialien sind z.B. Papier, Kunststofffolien und Metallfolien. Bei erfindungsgemäßen selbstklebenden Bändern kann es sich um einseitig oder beidseitig beschichtete Bänder aus den obigen Substanzen handeln. Besonders bevorzugt sind selbstklebende Etiketten. Bei erfindungsgemäßen selbstklebenden Etiketten kann es sich um Etiketten aus Papier oder einer thermoplastischen Folie handeln. Als thermoplastische Folie kommen z.B. Folien aus Polyolefinen (z.B. Polyethylen, Polypropylen), Polyolefincopolymeren, Folien aus Polyestern (z.B. Polyethylenterephtalat) oder Polyacetat in Betracht. Die Oberflächen der thermoplastischen Polymerfolien sind vorzugweise coronabehandelt. Die Etiketten sind einseitig mit Klebstoff beschichtet. Bevorzugte Substrate für die selbstklebenden Artikel sind Papier und Polymerfolien. Besonders bevorzugte selbstklebende Artikel sind Papieretiketten.

Die selbstklebenden Artikel sind auf mindestens einer Oberfläche zumindest teilweise mit einem erfindungsgemäßen Haftklebstoff beschichtet. Der Klebstoff kann nach üblichen Methoden wie Rollen, Rakeln oder Streichen auf die Artikel aufgetragen werden. Es können übliche Beschichtungsverfahren angewendet werden, z.B. Walzenstreichen, Gegenlaufwalzenstreichen, Gravurwalzenstreichen, Gegenlaufgravurwalzenstreichen, Bürstenstreichen, Stabstreichen, Sprühbeschichten, Luftbürstenbeschichtung, Meniskusbeschichtung, Vorhangbeschichtung oder Tauchbeschichtung. Die Auftragsmenge beträgt bevorzugt 0,1 bis 30 g, besonders bevorzugt 2 bis 20 g Feststoff pro m$^2$. Nach dem Auftragen folgt im Allgemeinen ein Trocknungsschritt zur Entfernung des Wasser bzw. der Lösungsmittel. Das Wasser kann durch Trocknung bei z.B. 50 bis 150°C entfernt werden. Die so erhaltenen, beschichteten Substrate werden z.B. als Selbstklebeartikel, wie Etiketten, Klebebänder oder Folien verwendet. Die Träger können hierzu vor oder nach dem Aufbringen des Klebstoffs zu Klebebändern, Etiketten oder Folien geschnitten werden. Zur späteren Verwendung kann die mit Haftklebstoff beschichtete Seite der Substrate, mit einem Releasepapier, z. B. mit einem silikonisierten Papier, abgedeckt werden.

Bei den Substraten, auf welche die selbstklebenden Artikel vorteilhaft aufgebracht werden können, kann es sich z.B. um Metall, Holz, Glas, Papier oder Kunststoff handeln. Die selbstklebenden Artikel eignen sich insbesondere zum Verkleben auf Verpackungsoberflächen, Kartons, Kunststoffverpackungen, Bücher, Fenster, Kraftfahrzeugkarosserien oder Karosserieteilen.

Die vorliegende Erfindung betrifft auch ein Verfahren zur Herstellung von sebstklebenden Artikeln, bei dem man eine erfindungsgemäße wässrige Haftklebstoffdispersion einsetzt. Hierbei können die wässrigen Haftklebstoffdispersionen als solche oder nach Konfektionierung mit den oben genannten üblichen Hilfsstoffen eingesetzt werden. Bei dem Verfahren zur Herstellung von selbstklebenden Artikeln wird die erfindungsgemäße wässrige Haftklebstoffdispersion auf einem Trägermaterial, welches vorzugsweise ausgewählt ist aus Papier und Kunststofffolien, aufgebracht und getrocknet.

Besondere Vorteile des erfindungsgemäßen Herstellverfahrens und der erfindungsgemäßen Produkte sind insbesondere:

- verbesserte Kohäsion und/oder Adhäsion im Vergleich zu herkömmlich hergestellten Haftklebstoffdispersionen
- Reduzierung des Koagulatgehaltes im Vergleich zu herkömmlich hergestellten Haftklebstoffdispersionen
- es kann emulgatorarm oder nahezu emulgatorfrei gearbeitet werden (geringe Mengen an Emulgator bei Verwendung einer emulgatorstabilisierten Polymersaat sind unschädlich)
- Einfachheit des Verfahrens (kein Zudosieren des Initiators notwendig)
- Kostenersparnis im Vergleich zu anderen schutzkolloidstabilisierten Polymerdispersionen, da aufgrund der in situ-Herstellung des Schutzkolloids die separate Synthese, der Transport und die Lagerung des Schutzkolloids entfallen können
- Umfangreiche Variabilität des Verfahrens hinsichtlich der Zusammensetzung des einsetzbaren Schutzkolloids (Polymer der ersten Stufe) sowie der Gesamtzusammensetzung der Polymerdispersion.


Beispiele

Beispiel B1

In einem auf 85°C geheizten Reaktionskessel mit Ankerrührer werden 19,7 g Polystyrol-Saatdispersion (Gehalt: 33%, Teilchengröße = 30 nm) und 430 g vollentsalztes Wasser vorgelegt. Anschließend werden 111 g Natriumperoxodisulfatlösung (7%ig in Wasser) zugegeben und für 3 min bei 85°C gerührt. Danach erfolgt innerhalb von 40 min die Zugabe von Monomerzulauf 1. Nach 10 minütigem Nachpolymerisieren der ersten Polymerisationsstufe wird mit 6,2 g Ammoniak (25%ig in Wasser) in 25 g vollentsalztem Wasser teilneutralisiert. Dann wird die zweite Polymerisationsstufe gestartet, indem Monomerzulauf 2 gestartet und innerhalb von 90 Minuten zugegeben wird. 40 Minuten nach dem Start von Monomerzulauf 2 wird durch Zulauf von 7,8 g Ammoniak (25%ig in Wasser) in 31 g vollentsalztem Wasser innerhalb von 10 Minuten neutralisiert. Anschließend werden noch 13 g tert.-Butylhydroperoxid und 16,9 g Acetonbisulfit zugegeben, abgekühlt und filtriert.
Feststoffgehalt 54%; pH-Wert 5,6

Monomerzulauf 1:

| | |
|---|---|
| 74 g | Wasser |
| 1,63 g | Disponil® FES 77 (Fettalkoholethersulfat, Natriumsalz, 32-34%ige wässrige Lösung) |
| 1,16 g | Dowfax® 2A1 (Alkyldiphenyloxiddisulfonat, 45%ige wässrige Lösung) |
| 13 g | Acrylsäure |
| 20,8 g | Methylmethacrylat |
| 205,4 g | 2-Ethylhexylarcrylat |
| 1,95 g | 2-Ethylhexylthioglykolat |

Monomerzulauf 2:

| | |
|---|---|
| 304 g | Wasser |
| 6,5 g | Disponil® FES 77 |
| 4,62 g | Dowfax® 2A1 |
| 20,8 g | 2-Hydroxypropylacrylat |
| 20,8 g | Styrol |
| 62,4 g | Vinylacetat |
| 936 g | 2-Ethylhexylarcrylat |

Beispiele B2 - B6

Polymerisation wie in Beispiel B1 unter Verwendung der in Tabellen 1 und 2 aufgeführten Monomerzuläufe 1 und 2 im Gewichtsverhältnis 20:80, bezogen auf die Monomere.

Tabelle 1: Monomerzulauf 1 (Angaben in Gewichtsteilen)

| | B1 | B2 | B3 | B4 | B5 | B6 |
|---|---|---|---|---|---|---|
| 2-Ethylhexylacrylat | 79 | 79 | | 79 | 79 | 79 |
| n-Butylacrylat | | | 79 | | | |
| Methylmethacrylat | 8 | 8 | 8 | 8 | 8 | 8 |
| Vinylacetat | 8 | 8 | | 8 | 8 | 8 |
| Methylacrylat | | | 8 | | | |
| Acrylsäure | 5 | 5 | 5 | 5 | 5 | 5 |
| 2-Ethylhexylthioglykolat | 0,15 | 0,15 | 0,15 | 0,15 | 0,15 | - |
| Disponil® FES 77 | 0,1 | - | 0,1 | 0,1 | 0,1 | 0,1 |
| Dowfax® 2A1 | 0,1 | - | 0,1 | 0,1 | 0,1 | 0,1 |
| Tg[°C] | -38,5 | -38,5 | -25,6 | -38,5 | -38,5 | -38,5 |

Tabelle 2: Monomerzulauf 2 (Angaben in Gewichtsteilen)

| | B1 | B2 | B3 | B4 | B5 | B6 |
|---|---|---|---|---|---|---|
| 2-Ethylhexylacrylat | 90 | 90 | 90 | 89 | 79 | 90 |
| Vinylacetat | 6 | 6 | 6 | 6 | 10 | 6 |
| Styrol | 2 | 2 | 2 | 2 | - | 2 |

(fortgesetzt)

| | B1 | B2 | B3 | B4 | B5 | B6 |
|---|---|---|---|---|---|---|
| 2-Hydroxypropylacrylat | 2 | 2 | 2 | 2 | - | 2 |
| Methylmethacrylat | | | | | 10 | |
| Acrylsäure | | | | 1 | 1 | |
| Disponil® FES 77 | 0,1 | | | 0,1 | 0,1 | 0,1 |
| Dowfax® 2A1 | 0,1 | | | 0,1 | 0,1 | 0,1 |
| Tg [°C] | -50,9 | -50,9 | -50,9 | -49,8 | -39,4 | -50,9 |

Vergleichspolymerdispersion V1 bis V6

Die Herstellung erfolgte analog B1 bis B6 mit dem Unterschied, dass die Polymerisation einstufig erfolgte, d.h. eine Mischung von Monomerzulauf 1 und Monomerzulauf 2 jeweils als ein einziger, gemeinsamer Monomerzulauf innerhalb von 130 Minuten zugegeben wurde.

Die Dispersionen wurden auf Koagulatbildung untersucht. Die Ergebnisse sind in Tabelle 3 angegeben.

Tabelle 3: Koagulatbildung, Angaben in g

| | B1 | V1 | B2 | V2 | B3 | V3 | B4 | V4 | B5 | V5 | B6 | V6 |
|---|---|---|---|---|---|---|---|---|---|---|---|---|
| Koagulat | 10 | 50 | 18 | 25 | 14 | 30 | 5 | 10 | 5 | 10 | 5 | 15 |

Anwendungstechnische Prüfung:

Die Haftklebstoffe wurden mit einer Auftragsmenge von 19 g/m$^2$ auf Hostaphan® RN 36 (biaxial orientierte Folie aus Polyethylenterephtalat, 36 $\mu$m Dicke) als Träger beschichtet und getrocknet. Anschließend wurden die Schälfestigkeit (Adhäsion) und die Scherfestigkeit (Kohäsion) bestimmt.

Der mit Haftklebstoff beschichtete Träger wurde in 25 mm breite Prüfstreifen geschnitten. Zur Bestimmung der Scherfestigkeit wurden die Prüfstreifen mit einer verklebten Fläche von 25x25 mm auf Stahl geklebt, mit einer 1 kg schweren Rolle 1 mal angerollt, 10 min gelagert (im Normklima, 50 % rel. Luftfeuchtigkeit 1 bar, 23 °C) und anschließend hängend mit einem 1 kg Gewicht belastet (im Normklima). Das Maß für die Scherfestigkeit war die Zeit in Minuten bis zum Abfallen des Gewichts; es wird jeweils der Durchschnitt aus 5 Messungen berechnet.

Bei der Bestimmung der Schälfestigkeit (Adhäsion) wurde jeweils ein 25 mm breiter Prüfstreifen auf einen Prüfkörper aus Polyethylen geklebt und mit einer 1 kg schweren Rolle 1-mal angerollt. Er wurde dann mit einem Ende in die oberen Backen einer Zug-Dehnungs-Prüfapparatur eingespannt. Der Klebestreifen wurde mit 300 mm/min unter einem 180° Winkel von der Prüffläche abgezogen d.h. der Klebestreifen wurde umgebogen und parallel zum Prüfkörper abgezogen und der dazu benötigte Kraftaufwand gemessen. Das Maß für die Schälfestigkeit war die Kraft in N/25 mm, die sich als Durchschnittswert aus fünf Messungen ergab. Die Schälfestigkeit wurde 24 Stunden nach der Verklebung bestimmt. Nach dieser Zeit hat sich die Klebekraft voll ausgebildet. Die Testmethoden entsprechen im Wesentlichen den Finat-Testmethoden (FTM) Nr. 1 und Nr. 8. Die Ergebnisse sind in Tabelle 4 dargestellt.

Tabelle 4: Testergebnisse Schälfestigkeit und Scherfestigkeit

| Beispiel | Schälfestigkeit auf PE [N/25 mm] | Scherfestigkeit auf Stahl [min] |
|---|---|---|
| B1 | 8,2 | 60 |
| V1 | 4,0 | 8 |
| B2 | 6,9 | 20 |
| V2 | 4,5 | 4 |
| B3 | 11,7 | 6 |
| V3 | 3,7 | 1 |
| B4 | 14,8 | 551 |

(fortgesetzt)

| Beispiel | Schälfestigkeit auf PE [N/25 mm] | Scherfestigkeit auf Stahl [min] |
|----------|----------------------------------|--------------------------------|
| V4 | 7,1 | 29 |
| B5 | 5,0 | > 1000 |
| V5 | 5,0 | 213 |
| B6 | 13,0 | 2100 |
| V6 | 13,0 | 1666 |

Die erfindungsgemäßen Beispiele zeigen gegenüber dem jeweiligen direkten Vergleichsbeispiel jeweils eine deutlich erhöhte Scherfestigkeit (Kohäsion), wobei die Adhäsion mindestens gleich bleibt. Die Beispiele B1 bis B4 zeigen gegenüber dem jeweiligen direkten Vergleichsbeispiel jeweils eine deutlich erhöhte Schälfestigkeit (Adhäsion).

**Patentansprüche**

1.  Verfahren zur Herstellung einer wässrigen Haftklebstoffdispersion,

    - wobei zunächst in einer ersten Stufe in wässrigem Medium durch radikalische Emulsionspolymerisation ein in Wasser dispergiertes erstes Polymerisat hergestellt wird, wobei das erste Polymerisat hergestellt wird aus einer ersten Zusammensetzung, enthaltend ethylenisch ungesättigte, radikalisch polymerisierbare Monomere, und wobei
    - anschließend in einer zweiten Stufe eine Polymerdispersion in wässrigem Medium und in Gegenwart des ersten Polymerisats durch radikalische Emulsionspolymerisation einer von der ersten Zusammensetzung verschiedenen zweiten Zusammensetzung, enthaltend ethylenisch ungesättigte, radikalisch polymerisierbare Monomere, hergestellt wird,
    - wobei die Monomeren der ersten Stufe mindestens ein Monomer mit mindestens einer Säuregruppe in einer Menge von mindestens 0,1 Gew.-Teilen, bezogen auf die Gesamtmenge an Monomeren der ersten und zweiten Stufe, umfassen, und
    - wobei die Polymerisation der ersten Stufe bei einem pH-Wert kleiner 5 erfolgt und entweder während der Polymerisation der zweiten Stufe oder vor und während der Polymerisation der zweiten Stufe die Säuregruppen des ersten Polymerisats soweit neutralisiert werden, dass der pH-Wert der Polymerdispersion am Ende der zweiten Stufe größer 5 beträgt; und
    - wobei die für ein aus den Monomeren der zweiten Stufe hergestelltes Polymer berechnete Glasübergangstemperatur kleiner -20 °C ist.

2.  Verfahren nach dem vorhergehenden Anspruch, **dadurch gekennzeichnet, dass** insgesamt weniger als 1,0 Gew.%, bezogen auf Feststoffgehalt der Polymerdispersion, Emulgator oder kein Emulgator verwendet wird.

3.  Verfahren nach einem der vorhergehenden Ansprüche, **dadurch gekennzeichnet, dass** in der ersten Stufe Säuregruppen aufweisende Monomere mit Monomeren ohne Säuregruppen copolymerisiert werden, wobei das Gewichtsverhältnis von Säuregruppen aufweisenden Monomeren zu Monomeren ohne Säuregruppen im Bereich von 2:98 bis 15:85 liegt.

4.  Verfahren nach einem der vorhergehenden Ansprüche, **dadurch gekennzeichnet, dass** die in der ersten Stufe eingesetzten Monomeren mit mindestens einer Säuregruppe ausgewählt sind aus der Gruppe bestehend aus Acrylsäure, Methacrylsäure, Itaconsäure, Maleinsäure, Fumarsäure, Crotonsäure, Vinylessigsäure, Vinylmilchsäure, 2-Carboxyethylacrylat, Vinylsulfonsäure, Styrolsulfonsäure, Acrylamidomethylpropansulfonsäure, Sulfopropylacrylat, Sulfopropylmethacrylat und Mischungen dieser Monomere; und die in der ersten Stufe eingesetzten Monomeren ohne Säuregruppe ausgewählt sind aus der Gruppe bestehend aus C1-bis C10-Alkylacrylaten, C1- bis C10-Alkylmethacrylaten, Vinylestern von bis zu 20 C-Atome enthaltenden Carbonsäuren und Mischungen dieser Monomere.

5.  Verfahren nach einem der vorhergehenden Ansprüche, **dadurch gekennzeichnet, dass** mindestens 60 Gew.% der in der zweiten Stufe eingesetzten Monomeren ausgewählt sind aus der Gruppe bestehend aus C1- bis C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere.

6. Verfahren nach einem der vorhergehenden Ansprüche, **dadurch gekennzeichnet, dass** das in der ersten Stufe eingesetzte Monomer mit mindestens einer Säuregruppe Acrylsäure ist; und dass die in der ersten Stufe eingesetzten Monomere ohne Säuregruppen ausgewählt sind aus 2-Ethylhexylacrylat, n-Butylacrylat, Methylacrylat, Methylmethacrylat, Vinylacetat und deren Gemisch;
und dass mindestens 80 Gew.% der in der zweiten Stufe eingesetzten Monomere ausgewählt sind aus der Gruppe bestehend aus C1- bis C10-Alkylacrylaten, C1- bis C10-Alkylmethacrylaten, Vinylacetat, Styrol und deren Gemisch.

7. Verfahren nach einem der vorhergehenden Ansprüche, **dadurch gekennzeichnet, dass** die für ein aus den Monomeren der zweiten Stufe hergestelltes Polymer berechnete Glasübergangstemperatur im Bereich von -60 °C bis - 30 °C liegt.

8. Verfahren nach einem der vorhergehenden Ansprüche, **dadurch gekennzeichnet, dass** bei der Polymerisation der ersten Stufe ein Molekulargewichtsregler eingesetzt wird.

9. Verfahren nach einem der vorhergehenden Ansprüche, **dadurch gekennzeichnet, dass** das Gewichtsverhältnis der Menge der in der ersten Stufe eingesetzten Monomere zur Menge der in der zweiten Stufe eingesetzten Monomere von 5:95 bis 50:50 beträgt.

10. Verfahren nach einem der vorhergehenden Ansprüche, **dadurch gekennzeichnet, dass** die Polymerisation der ersten Stufe in Gegenwart eines Saatlatex erfolgt.

11. Verfahren nach einem der vorhergehenden Ansprüche, **dadurch gekennzeichnet, dass** die Neutralisation von Säuregruppen des ersten Polymerisats zumindest teilweise durch Zulauf eines Neutralisationsmittels während der Polymerisation der zweiten Stufe erfolgt.

12. Verfahren nach einem der vorhergehenden Ansprüche, **dadurch gekennzeichnet, dass** die in der zweiten Stufe eingesetzten Monomeren weniger als 2 Gew.-% oder keine Monomere mit Säuregruppen umfassen.

13. Wässrige Haftklebstoffdispersion, hergestellt nach dem Verfahren nach einem der vorhergehenden Ansprüche.

14. Verwendung der wässrigen Haftklebstoffdispersion nach dem vorhergehenden Anspruch zur Herstellung von selbstklebenden Artikeln.

15. Selbstklebender Artikel, erhältlich durch Beschichten eines Trägermaterials mit einer Haftklebstoffdispersion gemäß Anspruch 13.

16. Selbstklebender Artikel gemäß dem vorhergehenden Anspruch, **dadurch gekennzeichnet, dass** es sich um ein selbstklebendes Etikett, eine Klebefolie oder um ein Klebeband handelt.

17. Verfahren zur Herstellung von selbstklebenden Artikeln, **dadurch gekennzeichnet, dass** eine wässrige Haftklebstoffdispersion gemäß Anspruch 13 zur Verfügung gestellt wird und auf einem Trägermaterial, ausgewählt aus Papier und Kunststofffolien aufgebracht und getrocknet wird.

**Claims**

1. A process for preparing an aqueous pressure-sensitive adhesive dispersion,

   - where initially in a first stage in aqueous medium a first polymer dispersed in water is prepared by free-radical emulsion polymerization, the first polymer being prepared from a first composition comprising ethylenically unsaturated, free-radically polymerizable monomers, and where
   - subsequently in a second stage a polymer dispersion is prepared in aqueous medium and in the presence of the first polymer by free-radical emulsion polymerization of a second composition, which is different from the first composition and comprises ethylenically unsaturated, free-radically polymerizable monomers,

- where the monomers of the first stage comprise at least one monomer with at least one acid group, in an amount of at least 0.1 part by weight, based on the total amount of monomers of the first and second stages, and
- where the polymerization of the first stage takes place at a pH less than 5 and, either during the polymerization of the second stage or before and during the polymerization of the second stage, the acid groups of the first polymer are neutralized to an extent such that the pH of the polymer dispersion at the end of the second stage is greater than 5;
and
- where the glass transition temperature calculated for a polymer prepared from the monomers of the second stage is less than -20°C.

2. The process according to the preceding claim, wherein a total of less than 1.0% by weight of emulsifier, based on solids content of the polymer dispersion, or no emulsifier is used.

3. The process according to either of the preceding claims, wherein, in the first stage, monomers containing acid groups are copolymerized with monomers without acid groups, the weight ratio of monomers containing acid groups to monomers without acid groups being in the range from 2:98 to 15:85.

4. The process according to any of the preceding claims, wherein the monomers with at least one acid group that are used in the first stage are selected from the group consisting of acrylic acid, methacrylic acid, itaconic acid, maleic acid, fumaric acid, crotonic acid, vinylacetic acid, vinyllactic acid, 2-carboxyethyl acrylate, vinylsulfonic acid, styrenesulfonic acid, acrylamidomethylpropanesulfonic acid, sulfopropyl acrylate, sulfopropyl methacrylate, and mixtures of these monomers; and the monomers without acid group that are used in the first stage are selected from the group consisting of C1 to C10 alkyl acrylates, C1 to C10 alkyl methacrylates, vinyl esters of carboxylic acids comprising up to 20 C atoms, and mixtures of these monomers.

5. The process according to any of the preceding claims, wherein at least 60% by weight of the monomers used in the second stage are selected from the group consisting of C1 to C20 alkyl acrylates, C1 to C20 alkyl methacrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, and mixtures of these monomers.

6. The process according to any of the preceding claims, wherein the monomer with at least one acid group that is used in the first stage is acrylic acid; and wherein the monomers without acid groups that are used in the first stage are selected from 2-ethylhexyl acrylate, n-butyl acrylate, methyl acrylate, methyl methacrylate, vinyl acetate, and a mixture thereof;
and wherein at least 80% by weight of the monomers used in the second stage are selected from the group consisting of C1 to C10 alkyl acrylates, C1 to C10 alkyl methacrylates, vinyl acetate, styrene, and a mixture thereof.

7. The process according to any of the preceding claims, wherein the glass transition temperature calculated for a polymer prepared from the monomers of the second stage is in the range from -60°C to -30°C.

8. The process according to any of the preceding claims, wherein a molecular weight regulator is used in the polymerization of the first stage.

9. The process according to any of the preceding claims, wherein the weight ratio of the amount of the monomers used in the first stage to the amount of the monomers used in the second stage is from 5:95 to 50:50.

10. The process according to any of the preceding claims, wherein the polymerization of the first stage takes place in the presence of a seed latex.

11. The process according to any of the preceding claims, wherein the neutralization of acid groups of the first polymer takes place at least partly by feed addition of a neutralizing agent during the polymerization of the second stage.

12. The process according to any of the preceding claims, wherein the monomers used in the second stage comprise less than 2% by weight of or no monomers with acid groups.

13. An aqueous pressure-sensitive adhesive dispersion prepared by the process according to any of the preceding claims.

**14.** The use of the aqueous pressure-sensitive adhesive dispersion according to the preceding claim for producing self-adhesive articles.

**15.** A self-adhesive article obtainable by coating a carrier material with a pressure-sensitive adhesive dispersion according to claim 13.

**16.** The self-adhesive article according to the preceding claim, which is a self-adhesive label, an adhesive sheet or an adhesive tape.

**17.** A process for producing self-adhesive articles, which comprises providing an aqueous pressure-sensitive adhesive dispersion according to claim 13 and applying it to and drying it on a carrier material selected from paper and polymeric films.


**Revendications**

**1.** Procédé pour la préparation d'une dispersion aqueuse d'adhésif sensible à la pression,

- dans lequel d'abord dans une première étape en milieu aqueux on prépare par polymérisation radicalaire en émulsion un premier polymérisat dispersé dans l'eau, le premier polymérisat étant préparé à partir d'une première composition contenant des monomères à insaturation éthylénique, polymérisables par voie radicalaire, et dans lequel
- ensuite dans une deuxième étape on prépare une dispersion de polymère en milieu aqueux et en présence du premier polymérisat, par polymérisation radicalaire en émulsion d'une deuxième composition différente de la première composition, contenant des monomères à insaturation éthylénique, polymérisables par voie radicalaire,
- dans lequel les monomères de la première étape comprennent au moins un monomère comportant au moins un groupe acide en une quantité d'au moins 0,1 partie en poids, par rapport à la quantité totale de monomères des première et deuxième étapes, et
- dans lequel la polymérisation de la première étape est effectuée à un pH inférieur à 5 et soit pendant la polymérisation de la deuxième étape, soit avant et pendant la polymérisation de la deuxième étape on neutralise les groupes acides du premier polymérisat jusqu'à ce que le pH de la dispersion de polymère soit supérieur à 5 à la fin de la deuxième étape ; et
- dans lequel la température de transition vitreuse calculée pour un polymère préparé à partir des monomères de la deuxième étape est inférieure à -20 °C.

**2.** Procédé selon la revendication précédente, **caractérisé en ce qu'**on utilise au total moins de 1,0 % en poids, par rapport à la teneur en matière solide de la dispersion de polymère, d'émulsifiant ou on n'utilise aucun émulsifiant.

**3.** Procédé selon l'une quelconque des revendications précédentes, **caractérisé en ce que** dans la première étape on copolymérise des monomères comportant des groupes acides avec des monomères sans groupes acides, le rapport pondéral des monomères comportant des groupes acides aux monomères sans groupes acides se situant dans la plage allant de 2:98 à 15:85.

**4.** Procédé selon l'une quelconque des revendications précédentes, **caractérisé en ce que** les monomères comportant au moins un groupe acide, utilisés dans la première étape, sont choisis dans le groupe constitué par l'acide acrylique, l'acide méthacrylique, l'acide itaconique, l'acide maléique, l'acide fumarique, l'acide crotonique, l'acide vinylacétique, l'acide vinyllactique, l'acrylate de 2-carboxyéthyle, l'acide vinylsulfonique, l'acide styrènesulfonique, l'acide acrylamidométhylpropanesulfonique, l'acrylate de sulfopropyle, le méthacrylate de sulfopropyle et des mélanges de ces monomères ; et les monomères sans groupe acide, utilisés dans la première étape, sont choisis dans le groupe constitué par des acrylates d'alkyle en $C_1$-$C_{10}$, des méthacrylates d'alkyle en $C_1$-$C_{10}$, des esters vinyliques d'acides carboxyliques contenant jusqu'à 20 atomes de carbone et des mélanges de ces monomères.

**5.** Procédé selon l'une quelconque des revendications précédentes, **caractérisé en ce qu'**au moins 60 % en poids des monomères utilisés dans la deuxième étape sont choisis dans le groupe constitué par des acrylates d'alkyle en $C_1$-$C_{20}$, des méthacrylates d'alkyle en $C_1$-$C_{20}$, des esters vinyliques d'acides carboxyliques contenant jusqu'à 20 atomes de carbone, des composés vinylaromatiques ayant jusqu'à 20 atomes de carbone, des nitriles à insaturation éthylénique, des halogénures de vinyle, des éthers vinyliques d'alcools contenant de 1 à 10 atomes de carbone, des hydrocarbures aliphatiques ayant de 2 à 8 atomes de carbone et comportant une ou deux doubles liaisons et des mélanges de ces monomères.

6. Procédé selon l'une quelconque des revendications précédentes, **caractérisé en ce que** le monomère comportant au moins un groupe acide, utilisé dans la première étape, est l'acide acrylique ; et **en ce que** le monomère sans groupes acides, utilisé dans la première étape, est choisi parmi l'acrylate de 2-éthylhexyle, l'acrylate de n-butyle, l'acrylate de méthyle, le méthacrylate de méthyle, l'acétate de vinyle et un mélange de ceux-ci ; et **en ce qu'**au moins 80 % en poids des monomères utilisés dans la deuxième étape sont choisis dans le groupe constitué par des acrylates d'alkyle en $C_1$-$C_{10}$, des méthacrylates d'alkyle en $C_1$-$C_{10}$, l'acétate de vinyle, le styrène et un mélange de ceux-ci.

7. Procédé selon l'une quelconque des revendications précédentes, **caractérisé en ce que** la température de transition vitreuse calculée pour un polymère produit à partir des monomères de la deuxième étape se situe dans la plage de -60 °C à -30 °C.

8. Procédé selon l'une quelconque des revendications précédentes, **caractérisé en ce que** dans la polymérisation de la première étape on utilise un régulateur de masse moléculaire.

9. Procédé selon l'une quelconque des revendications précédentes, **caractérisé en ce que** le rapport pondéral de la quantité des monomères utilisés dans la première étape à la quantité des monomères utilisés dans la deuxième étape vaut de 5:95 à 50:50.

10. Procédé selon l'une quelconque des revendications précédentes, **caractérisé en ce que** la polymérisation de la première étape s'effectue en présence d'un latex d'ensemencement.

11. Procédé selon l'une quelconque des revendications précédentes, **caractérisé en ce que** la neutralisation des groupes acides du premier polymérisat s'effectue au moins en partie par introduction d'un agent de neutralisation pendant la polymérisation de la deuxième étape.

12. Procédé selon l'une quelconque des revendications précédentes, **caractérisé en ce que** les monomères utilisés dans la deuxième étape comprennent moins de 2 % en poids de monomères à groupes acides ou n'en comprennent aucun.

13. Dispersion aqueuse d'adhésif sensible à la pression, préparée conformément au procédé selon l'une quelconque des revendications précédentes.

14. Utilisation de la dispersion aqueuse d'adhésif sensible à la pression selon la revendication précédente, pour la fabrication d'articles autoadhésifs.

15. Article autoadhésif, pouvant être obtenu par revêtement d'un matériau de support avec une dispersion d'adhésif sensible à la pression selon la revendication 13.

16. Article autoadhésif selon la revendication précédente, **caractérisé en ce qu'**il s'agit d'une étiquette autoadhésive, d'un film adhésif ou d'un ruban adhésif .

17. Procédé pour la fabrication d'articles autoadhésifs, **caractérisé en ce qu'**on fournit une dispersion aqueuse d'adhésif sensible à la pression selon la revendication 13 et on l'applique sur un matériau de support, choisi parmi le papier et des films en matière plastique, et on la sèche.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19857876
- EP 1479699 A
- EP 81083 A

**In der Beschreibung aufgeführte Nicht-Patentliteratur**

- **T.G. FOX.** *Bull. Am. Phys. Soc.,* 1956, vol. 1 (II), 123
- Ullmann's Encyclopädie der technischen Chemie. Verlag Chemie, 1980, vol. 19, 18
- Ullmann's Ecyclopedia of Industrial Chemistry. VCH Weinheim, 1992, vol. A21, 169
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley, 1989
- **W. MÄCHTLE.** *Makromolekulare Chemie,* 1984, vol. 185, 1025-1039
- *Adhesive Age,* Juli 1987, 19-23
- *Polym. Mater. Sci. Eng.,* 1989, vol. 61, 588-592